# EUROPÄISCHE PATENTSCHRIFT

(11) **EP 1 996 635 B1**
(45) Veröffentlichungstag und Bekanntmachung des Hinweises auf die Patenterteilung: **11.05.2016**
(21) Anmeldenummer: 07726854.8
(22) Anmeldetag: 13.03.2007
(51) Int. Cl.: C08G 18/12, C08G 18/76, C08G 18/48, C09J 175/00

(54) **FEUCHTIGKEITSHÄRTENDE POLYURETHANZUSAMMENSETZUNG MIT GUTEM TIEFTEMPERATURVERHALTEN**
MOISTURE-CURING POLYURETHANE COMPOSITION WITH GOOD LOW-TEMPERATURE PERFORMANCE
COMPOSITION DE POLYURETHANNE DURCISSANT A L'HUMIDITE PRESENTANT UN BON COMPORTEMENT A BASSE TEMPERATURE

(30) Priorität: 13.03.2006 EP 06111028
(43) Veröffentlichungstag der Anmeldung: 03.12.2008
(73) Patentinhaber: Sika Technology AG, 6340 Baar (CH)
(72) Erfinder: ONUOHA, Ukiwo, CH-8303 Bassersdorf (CH); BURCKHARDT, Urs, CH-8049 Zürich (CH)
(74) Vertreter: Sika Patent Attorneys
(86) Internationale Anmeldenummer: PCT/EP2007/052352
(87) Internationale Veröffentlichungsnummer: WO 2007/104761

(56) Entgegenhaltungen:
- EP-A- 0 469 751
- EP-A- 1 329 469
- US-A- 4 853 454
- US-A- 5 104 930
- US-A- 5 466 771
- US-A- 5 516 873

## Beschreibung

### Technisches Gebiet

Die vorliegende Erfindung betrifft das Gebiet der einkomponentigen feuchtigkeitshärtenden Polyurethanzusammensetzungen, sowie deren Verwendungen, insbesondere als Dichtstoffe.

### Stand der Technik

Der Einsatz von einkomponentigen feuchtigkeitshärtenden Polymerzusammensetzungen als Dichtstoffe für Abdichtungen im Bauwesen, wie beispielsweise Dilatationsfugen im Hoch- oder Tiefbau, ist bekannt. Diese Dichtstoffe sollen lagerstabil sein und unter dem Einfluss von Feuchtigkeit, insbesondere in Form von Luftfeuchtigkeit, rasch aushärten, um nach dem Applizieren nicht zu verschmutzen bzw. bald überstreichbar zu sein. Des weiteren sollen solche Dichtstoffe möglichst weichelastisch sein, das heisst im tiefen Dehnungsbereich bis 100% über niedrige Werte für die Dehnspannung verfügen und gleichzeitig ein hohes Rückstellvermögen aufweisen, um Ausdehnungen und Verschiebungen der abgedichteten Substrate möglichst kraftarm und reversibel zu überbrücken.

Für diesen Einsatz bevorzugte Polymerzusammensetzungen sind einkomponentige Polyurethanmassen, welche freie Isocyanatgruppen enthalten. Solche Massen neigen aber aufgrund des bei der Hydrolyse der Isocyanatgruppen entstehenden Kohlendioxids dazu, bei der Aushärtung Blasen zu bilden. Zudem steigt deren Dehnspannung bei tiefen Temperaturen teilweise stark an, was besonders bei Anwendungen im Aussenbereich sehr unerwünscht ist.

Blasenfrei aushärtende einkomponentige Polyurethanmassen sind bekannt. Sie wurden beschrieben beispielsweise bei US 3,420,800 oder US 4,853,454. Diese Systeme enthalten latente Polyamine, beispielsweise in Form von Polyaldiminen, wodurch bei ihrer Härtung mit Feuchtigkeit weniger oder gar kein Kohlendioxid entsteht und dadurch die Blasenbildung vermieden wird. Allerdings haben diese Systeme für eine Anwendung als weichelastische Baudichtstoffe zu hohe Dehnspannungen.

Polyurethanmassen enthaltend latente Polyamine mit weichelastischen Eigenschaften sind bekannt, beispielsweise aus EP-A-1 329 469. Es werden Zusammensetzungen enthaltend kurzkettige Polyaldimine und Prepolymere auf der Basis von langen linearen Polyoxyalkylenpolyolen mit tiefem Ungesättigtheitsgrad offenbart. So werden bei Raumtemperatur niedrige Werte für die Dehnspannung erhalten. Allerdings steigen die Dehnspannungswerte auch dieser Systeme in der Kälte stark an.

Langkettige Polyaldimine und ihre Verwendung in Polyurethanmassen sind ebenfalls beschrieben, beispielsweise in US 4,983,659 als RIM-System, in US 4,990,548 als Polyurethanschaum, oder in US 5,466,771 als zweikomponentige Beschichtung.

### Darstellung der Erfindung

Aufgabe der vorliegenden Erfindung ist es, die bisher aus dem Stand der Technik bekannten einkomponentigen Polyurethanzusammensetzungen im Hinblick auf eine Anwendung als weichelastische Dichtstoffe zu verbessern. Diese sollen lagerstabil sein, rasch sowie ohne Bildung von Blasen aushärten, nach ihrer Aushärtung ein gutes Rückstellvermögen aufweisen und über eine 100%-Dehnspannung verfügen, die sowohl bei Raumtemperatur wie auch bei -20 °C möglichst gleichbleibend tief ist.

Es wurde gefunden, dass die Verwendung von speziellen Polyaldiminen, wie sie in Anspruch 1 beschrieben sind, als latente Härter in einkomponentigen feuchtigkeitshärtenden Polyurethanzusammensetzungen zu einer deutlichen Verbesserung der aus dem Stand der Technik bekannten weichelastischen Dichtstoffe führt. Insbesondere steigt die 100%-Dehnspannung beim Abkühlen von Raumtemperatur auf -20 °C nur geringfügig an. Das heisst, die Spannung bei 100% Dehnung, gemessen bei Raumtemperatur und gemessen bei -20 °C" ist nahezu gleich.

### Wege zur Ausführung der Erfindung

Gegenstand der vorliegenden Erfindung sind einkomponentige feuchtigkeitshärtende Zusammensetzungen, umfassend
a) mindestens ein Isocyanatgruppen enthaltendes Polyurethanpolymer **P,** welches ein mittleres Molekulargewicht von mindestens 4000 g/mol aufweist, und
b) mindestens ein Polyaldimin **ALD** der Formel (I), 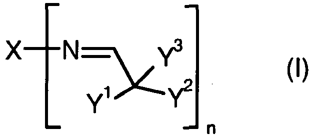
   wobei X für den Rest eines n-funktionellen Polyamins mit aliphatischen primären Aminogruppen und einem mittleren Amin-Equivalentgewicht von mindestens 180 g/Eq, bevorzugt mindestens 220 g/Eq, nach Entfernung von n Aminogruppen steht,
   n für 2 oder 3 steht,
   Y¹ und Y² entweder, unabhängig voneinander, je für einen einwertigen Kohlenwasserstoffrest mit 1 bis 12 C-Atomen stehen, oder zusammen einen zweiwertigen Kohlenwasserstoffrest mit 4 bis 20 C-Atomen bilden, der Teil eines, gegebenenfalls substituierten, carbocyclischen Rings mit 5 bis 8, bevorzugt 6, C-Atomen, ist, und
   Y³ für einen Rest der Formel (IV) steht, 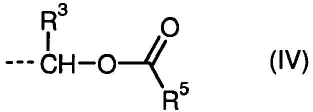
   wobei R³ für ein Wasserstoffatom oder für eine Alkyl- oder Arylalkylgruppe steht, und
   R⁵ entweder für eine lineare oder verzweigte Alkylkette mit 11 bis 30 Kohlenstoff-Atomen, gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette mit 11 bis 30 Kohlenstoff-Atomen steht;

Der Gehalt an Isocyanatgruppen beträgt höchstens 3.5 Gewichts-%, bezogen auf die Summe der in der Zusammensetzung enthaltenen Isocyanatgruppen-haltigen Bestandteile.

Weiterhin enthält die Zusammensetzung mindestens einen Katalysator **K,** welcher die Hydrolyse der Aldimingruppen beschleunigt und welcher eine organische Carbonsäure, ein organisches Carbonsäureanhydrid, ein Silylester einer organischen Carbonsäure, eine organische Sulfonsäure, ein Sulfonsäureester oder eine andere organische oder anorganische Säure ist, und dessen Gehalt 0.005 bis 2 Gewichts-%, bezogen auf die gesamte Polyurethanzusammensetzung, beträgt.

Eine solche Zusammensetzung hat nach der Aushärtung die Eigenschaft, dass die 100%-Dehnspannung gemessen bei Raumtemperatur ("σ_{100%(RT)}") und gemessen bei -20 °C ("σ_{100%(-20°C)}") nahezu gleich hoch ist. Sie ist speziell geeignet als weichelastischer Dichtstoff zum Abdichten von Fugen im Aussenbereich von Bauwerken.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Der Begriff "Polyamin" bezeichnet hier und im Folgenden aliphatische primäre Di- oder Triamine, das heisst Verbindungen, die formal zwei oder drei primäre Aminogruppen (NH₂-Gruppen) enthalten, die an einen aliphatischen, cycloaliphatischen oder arylaliphatischen Rest, der gegebenenfalls Heteroatome enthalten kann, gebunden sind. Sie unterscheiden sich damit von den aromatischen primären Polyaminen, in welchen die NH₂-Gruppen direkt an einen aromatischen oder heteroaromatischen Rest gebunden sind, wie beispielsweise in Diaminotoluol.

Der Begriff "Amin-Equivalentgewicht" bezeichnet im vorliegenden Dokument diejenige Masse eines Polyamins, welche 1 mol primäre Aminogruppen enthält.

Der Begriff "Dehnspannung" ("σ") bezeichnet die Spannung, welche in einem Material im gedehnten Zustand wirkt. Der Begriff "100%-Dehnspannung" ("σ_{100%}") bezeichnet die Spannung, welche in einem Material wirkt, welches auf seine doppelte Länge gedehnt ist, auch als "Spannung bei 100% Dehnung" bezeichnet.

Der Begriff "mittleres Molekulargewicht" oder auch einfach "Molekulargewicht", falls er sich auf Molekülgemische, insbesondere Oligomeren- oder Polymerengemische, und nicht auf reine Moleküle bezieht, bezeichnet im vorliegenden Dokument das Molekulargewichtsmittel Mₙ (Zahlenmittel).

Die feuchtigkeitshärtende Zusammensetzung enthält mindestens ein Isocyanatgruppen enthaltendes Polyurethanpolymer **P,** welches ein mittleres Molekulargewicht von mindestens 4'000 g/mol aufweist. Das Polyurethanpolymer **P** ist insbesondere erhältlich durch die Umsetzung von mindestens einem Polyisocyanat mit mindestens einem Polyol, wobei das NCO/OH-Verhältnis einen Wert von höchstens 2.5, insbesondere höchstens 2.2, aufweist.

Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von ≤ 2.5, bevorzugt ≤ 2.2, eingehalten wird. Unter dem NCO/OH-Verhältnis wird hierbei das Verhältnis der Anzahl der eingesetzten Isocyanatgruppen zu der Anzahl der eingesetzten Hydroxylgruppen verstanden. Bevorzugt verbleibt nach der Umsetzung aller Hydroxylgruppen des Polyols ein Gehalt an freien Isocyanatgruppen von 0.5 bis 3 Gewichts-%, bezogen auf das gesamte Polyurethanpolymer **P**.

Gegebenenfalls kann das Polyurethanpolymer **P** unter Mitverwendung von Weichmachern hergestellt werden, wobei die verwendeten Weichmacher keine gegenüber Isocyanaten reaktive Gruppen enthalten.

Als Polyole für die Herstellung eines Polyurethanpolymers **P** können beispielsweise die folgenden handelsüblichen Polyole oder Mischungen davon eingesetzt werden:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylol-propan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyalkylendiole oder Polyoxyalkylentriole, insbesondere Polyoxypropylendiole oder Polyoxypropylentriole.
Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.

Ebenfalls besonders geeignet sind sogenannte Ethylenoxid-terminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadien-polyole, wie beispielsweise solche, die durch Copolymerisation von 1,3-Butadien und Allylalkohol hergestellt werden.
- Polyhydroxyfunktionelle Acrylonitril/Polybutadien-Copolymere, wie sie beispielsweise aus Epoxiden oder Aminoalkoholen und carboxylterminierten Acrylonitril/Polybutadien-Copolymeren (kommerziell erhältlich unter dem Namen Hycar^{®} CTBN von Hanse Chemie) hergestellt werden können.

Diese genannten Polyole weisen bevorzugt ein mittleres Molekulargewicht von 250 - 30'000 g/mol, insbesondere von 1'000 - 30'000 g/mol, und weisen bevorzugt eine mittlere OH-Funktionalität im Bereich von 1.6 bis 3 auf.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Tri-ethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanpolymers **P** mitverwendet werden.

Als Polyisocyanate für die Herstellung eines Isocyanatgruppen enthaltenden Polyurethanpolymers **P** können beispielsweise die folgenden handelsüblichen Polyisocyanate verwendet werden:
1,6-Hexamethylendiisocyanat (HDI), 2-Methylpentamethylen-1,5-diiso-cyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3- und -1,4-diisocyanat und beliebige Gemische dieser Isomeren, 1-Isocya-nato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Di-isocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-düsocyanatodiphenyl (TODI), Oligomere und Polymere der vorgenannten Isocyanate, sowie beliebige Mischungen der vorgenannten Isocyanate. Bevorzugt sind MDI, TDI, HDI und IPDI.

Aufgrund des mittleren Molekulargewichts von mindestens 4000 g/mol und des bei seiner Herstellung vorteilhaft eingehaltenen NCO/OH-Verhältnisses von höchstens 2.5 weist das Polyurethanpolymer **P** einen relativ niedrigen Gehalt an Isocyanatgruppen auf. Dadurch ist es geeignet für den Einsatz in einkomponentigen feuchtigkeitshärtenden Zusammensetzungen, welche weichelastische Eigenschaften aufweisen. Ein Polyurethanpolymer mit einem mittleren Molekulargewicht von unter 4000 g/mol weist einen relativ hohen Gehalt an Isocyanatgruppen auf. Ebenso weist ein Polyurethanpolymer, welches bei einem NCO/OH-Verhältnis von grösser als 2.5 hergestellt wurde, aufgrund seines relativ hohen Gehalt an nicht umgesetztem Polyisocyanat einen relativ hohen Gehalt an Isocyanatgruppen auf.

Ein hoher Gehalt an Isocyanatgruppen in der Polyurethanzusammensetzung führt nach deren Aushärtung mit Feuchtigkeit zu einem hohen Gehalt an Harnstoffgruppen in der Zusammensetzung. Dies erhöht die Dehnspannung im Bereich bis 100% Dehnung jedoch über das für einen Einsatz als weichelastischer Dichtstoff gebührliche Mass. Polyurethanpolymere, welche bei einem bedeutend höheren NCO/OH-Verhältnis, beispielsweise in der Grössenordnung von 8, hergestellt werden, wie zu Beispiel von US 4,983,659 in Beispiel 2 für eine RIM-Zusammensetzung beschrieben, verfügen im ausgehärteten Zustand über sehr hohe Dehnspannungswerte. Sie sind deshalb für einen Dichtstoff mit weichelastischen Eigenschaften ungeeignet.

Üblicherweise ist das Polyurethanpolymer **P** in einer Menge von 10 - 80 Gewichts-%, bevorzugt in einer Menge von 15 - 50 Gewichts-%, bezogen auf die gesamte Polyurethanzusammensetzung, vorhanden.

Die einkomponentige feuchtigkeitshärtende Zusammensetzung enthält neben dem Isocyanatgruppen enthaltenden Polyurethanpolymer **P** mindestens ein Polyaldimin **ALD** der Formel (I).

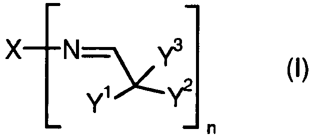

In Formel (I) steht n für 2 oder 3, und
X steht für den Rest eines n-funktionellen Polyamins mit aliphatischen primären Aminogruppen und einem mittleren Amin-Equivalentgewicht von mindestens 180 g/Eq, bevorzugt mindestens 220 g/Eq, nach Entfernung von n Aminogruppen.

Bevorzugt steht X für einen Kohlenwasserstoffrest, welcher gegebenenfalls substituiert ist, und welcher gegebenenfalls Heteroatome enthält, insbesondere in Form von Ether-Sauerstoff, tertiärem Amin-Stickstoff, und Thioether-Schwefel.

Besonders bevorzugt steht X für einen Polyoxyalkylenrest, insbesondere für einen Polyoxypropylen- oder einen Polyoxybutylenrest, wobei diese Reste jeweils auch Anteile von anderen Oxyalkylen-Gruppen enthalten können.

In der Formel (I) können Y¹ und Y² einerseits unabhängig voneinander jeweils einen einwertigen Kohlenwasserstoffrest mit 1 bis 12 C-Atomen darstellen.

Andererseits können Y¹ und Y² zusammen einen zweiwertigen Kohlenwasserstoffrest mit 4 bis 20 C-Atomen darstellen, der Teil eines, gegebenenfalls substituierten, carbocyclischen Rings mit 5 bis 8, bevorzugt 6, C-Atomen ist.

Ein Polyaldimin **ALD** ist erhältlich durch eine Kondensationsreaktion unter Abspaltung von Wasser zwischen einem Polyamin der Formel (V) mit einem Aldehyd der Formel (VI), wobei X, n und Y¹, Y², und Y³ die vorgängig genannten Bedeutungen aufweisen.

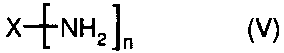

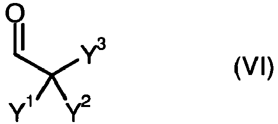

Polyamine der Formel (V) sind Polyamine mit zwei oder drei aliphatischen primären Aminogruppen und einem mittleren Amin-Equivalentgewicht von mindestens 180g/Eq. Der Rest X weist keine Gruppierungen auf, die in Abwesenheit von Wasser mit Isocyanatgruppen reaktionsfähig sind; insbesondere weist X keine Hydroxylgruppen, sekundäre Amingruppen, Harnstoffgruppen oder andere Gruppen mit aktivem Wasserstoff auf. Es ist vorteilhaft, wenn der Rest X möglichst wenige in der Kälte zur Kristallisation neigende Gruppierungen, wie beispielsweise blockweise angeordnete Polyoxyethylen-, Polyester- oder Polycarbonatgruppen, enthält, da diese das Tieftemperaturverhalten der ausgehärteten Zusammensetzung negativ beeinflussen können.

Die Verwendung von Polyaminen der Formel (V) zur Herstellung der Polyaldimine **ALD** hat zur Folge, dass die beschriebenen Polyurethanzusammensetzungen nicht nur weichelastische Eigenschaften aufweisen, sondern sich zusätzlich durch ein für Dichtstoffe vorteilhaftes Tieftemperaturverhalten auszeichnen, indem die Spannung bei 100% Dehnung, gemessen bei Raumtemperatur und gemessen bei -20 °C, nahezu gleich hoch ist. In der ausgehärteten Zusammensetzung bestimmt das Amin-Equivalentgewicht des eingesetzten Polyamins, wie weit die durch die Amin-Isocyanat-Reaktion gebildeten Harnstoffgruppen im ausgehärteten Polymer auseinanderliegen. Je höher das Amin-Equivalentgewicht des Polyamins, umso grösser ist der Abstand dieser Harnstoffgruppen, was das erwünschte Tieftemperaturverhalten offenbar begünstigt.

Geeignete Polyamine der Formel (V) sind beispielsweise hergestellt ausgehend von solchen Polyolen, wie sie bereits zur Herstellung des Polyurethanpolymers **P** erwähnt wurden. Einerseits können die OH-Gruppen der Polyole mittels Aminierung in primäre Aminogruppen umgewandelt werden, oder die Polyole werden durch eine Cyanoethylierung mit beispielsweise Acrylnitril und nachfolgender Reduktion in Polyamine überführt, oder die Polyole werden mit einem Überschuss Diisocyanat umgesetzt und die terminalen Isocyanatgruppen anschliessend zu Aminogruppen hydrolysiert.

Bevorzugt sind Polyamine mit einem Polyether-Gerüst, besonders solche mit einem Polyoxypropylen-Gerüst.

Geeignete kommerziell erhältliche Polyamine mit einem Polyether-Gerüst und mit einem Amin-Equivalentgewicht von mindestens 180 g/Eq sind beispielsweise:
- Polyoxypropylendiamine, wie Jeffamine^{®} D-400, D-2000 und D-4000 (von Huntsman Chemicals), Polyetheramin D 400, D 2000 (von BASF), und PC Amine^{®} DA 400 und DA 2000 (von Nitroil),
- Polyoxypropylentriamine, wie Jeffamine^{®} T-3000 und T-5000 (von Huntsman Chemicals) und Polyetheramin T 5000 (von BASF);
- Polytetrahydrofurandiamine, wie Polytetrahydrofuranamin 1700 (von BASF);
- Diamine aus der Cyanoethylierung von Polytetrahydrofurandiolen, wie Bis-(3-aminopropyl)polytetrahydrofuran 750, 1000 und 2100 (von BASF);
- Polyoxypropylen-polytetrahydrofuran-Blockcopolymer-Diamine, wie Jeffamine^{®} XTJ-533, XTJ-536 und XTJ-548 (von Huntsman Chemicals);
- Polyoxy(1,2-butylen)diamine, wie Jeffamine^{®} XTJ-523 (von Huntsman Chemicals).

Zur Herstellung eines Polyaldimins **ALD** werden Aldehyde der Formel (VI) verwendet. Diese Aldehyde haben die Eigenschaft, dass ihre Reste Y¹, Y², und Y³ und keine Gruppierungen aufweisen, die in Abwesenheit von Wasser mit Isocyanatgruppen reaktionsfähig sind; insbesondere weisen Y¹, Y², und Y³ keine Hydroxylgruppen, sekundäre Amingruppen, Harnstoffgruppen oder andere Gruppen mit aktivem Wasserstoff auf.

Geeignete Aldehyde der Formel (VI) sind tertiäre aliphatische oder tertiäre cycloaliphatische Aldehyde, wie beispielsweise Pivalaldehyd (= 2,2-Dimethyl-propanal), 2,2-Dimethyl-butanal, 2,2-Diethyl-butanal, 1-Methylcyclopentancarboxaldehyd, 1-Methyl-cyclohexancarboxaldehyd; sowie Ether aus 2-Hydroxy-2-methylpropanal und Alkoholen wie Propanol, Isopropanol, Butanol und 2-Ethylhexanol; Ester aus 2-Formyl-2-methylpropionsäure oder 3-Formyl-3-methylbuttersäure und Alkoholen wie Propanol, Isopropanol, Butanol und 2-Ethylhexanol; Ester aus 2-Hydroxy-2-methylpropanal und Carbonsäuren wie Buttersäure, Isobuttersäure und 2-Ethylhexansäure; sowie die im folgenden als besonders geeignet beschriebenen Ether und Ester von 2,2-disubstituierten 3-Hydroxypropanalen, -butanalen oder analogen höheren Aldehyden, insbesondere von 2,2-Dimethyl-3-hydroxypropanal.

Insbesondere geeignete Aldehyde der Formel (VI) sind Verbindungen der Formel (VI a), 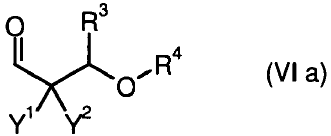 wobei Y¹, Y², und R³ die bereits genannten Bedeutungen aufweisen und R⁴ für eine Alkyl- oder eine Arlyalkylgruppe steht.

Verbindungen der Formel (VI a) stellen Ether von aliphatischen, araliphatischen oder alicyclischen 2,2-disubstituierten 3-Hydroxyaldehyden dar, wie sie aus Aldol-Reaktionen, insbesondere gekreuzten Aldol-Reaktionen, zwischen primären oder sekundären aliphatischen Aldehyden, insbesondere Formaldehyd, und sekundären aliphatischen, sekundären araliphatischen oder sekundären alicyclischen Aldehyden, wie beispielsweise 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd) oder Diphenylacetaldehyd, entstehen, mit Alkoholen, wie beispielsweise Methanol, Ethanol, Propanol, Isopropanol, Butanol, 2-Ethylhexanol oder Fettalkoholen, dar. Beispiele für Verbindungen der Formel (VI a) sind 2,2-Dimethyl-3-methoxy-propanal, 2,2-Dimethyl-3-ethoxy-propanal, 2,2-Dimethyl-3-isopropoxy-propanal, 2,2-Dimethyl-3-butoxy-propanal und 2,2-Dimethyl-3-(2-ethylhexyloxy)-propanal.

Insbesondere geeignete Aldehyde der Formel (VI) sind weiterhin Verbindungen der Formel (VI b), 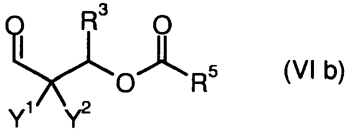 wobei Y¹, Y², R³ und R⁵ die bereits genannten Bedeutungen aufweisen.

Verbindungen der Formel (VI b) stellen Ester der bereits beschriebenen 2,2-disubstituierten 3-Hydroxyaldehyde, wie beispielsweise 2,2-Dimethyl-3-hydroxypropanal, 2-Hydroxymethyl-2-methyl-butanal, 2-Hydroxymethyl-2-ethylbutanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hydroxy-2,2-diphenyl-propanal, mit aliphatischen oder aromatischen Carbonsäuren, wie beispielsweise Ameisensäure, Essigsäure, Propionsäure, Buttersäure, Isobuttersäure, Valeriansäure, Capronsäure, 2-Ethyl-capronsäure, Caprinsäure, Laurinsäure, Myristinsäure, Palmitinsäure, Stearinsäure und Benzoesäure, dar. Bevorzugte Verbindungen der Formel (VI b) sind Ester aus 2,2-Dimethyl-3-hydroxypropanal und den genannten Carbonsäuren, wie beispielsweise 2,2-Dimethyl-3-formyloxy-propanal, 2,2-Dimethyl-3-acetoxy-propanal, 2,2-Dimethyl-3-isobutyroxy-propanal, 2,2-Dimethyl-3-(2-ethylhexanoyloxy)-propanal, 2,2-Dimethyl-3-lauroyloxy-propanal, 2,2-Dimethyl-3-palmitoyloxy-propanal, 2,2-Dimethyl-3-stearoyloxy-propanal und 2,2-Dimethyl-3-benzoyloxypropanal, sowie analoge Ester anderer 2,2-disubstituierter 3-Hydroxyaldehyde.

In einer bevorzugten Herstellmethode eines Aldehyds der Formel (VI b) wird ein 2,2-disubstituierter 3-Hydroxyaldehyd, beispielsweise 2,2-Dimethyl-3-hydroxypropanal, welcher beispielsweise aus Formaldehyd (oder Paraformaldehyd) und Isobutyraldehyd, gegebenenfalls in situ, hergestellt werden kann, mit einer Carbonsäure zum entsprechenden Ester umgesetzt. Diese Veresterung kann ohne die Verwendung von Lösemitteln nach bekannten Methoden erfolgen, beschrieben beispielsweise in Houben-Weyl, "Methoden der organischen Chemie", Vol. VIII, Seiten 516 - 528.

Es ist auch möglich, Aldehyde der Formel (VI b) herzustellen, indem zur Veresterung eines 2,2-disubstituierten 3-Hydroxyaldehyds eine aliphatische oder cycloaliphatische Dicarbonsäure, wie beispielsweise Bernsteinsäure, Adipinsäure oder Sebacinsäure, verwendet wird. Auf diese Weise werden entsprechende tertiäre aliphatische oder tertiäre cycloaliphatische Dialdehyde erhalten.

In einer besonders bevorzugten Ausführungsform sind die Aldehyde der Formel (VI) geruchsfrei. Unter einer "geruchsfreien" Substanz wird eine Substanz verstanden, die so geruchsarm ist, dass sie für die meisten menschlichen Individuen nicht riechbar, das heisst mit der Nase nicht wahrnehmbar, ist.

Geruchsfreie Aldehyde der Formel (VI) sind insbesondere Aldehyde der Formel (VI b), in welcher der Rest R⁵ entweder für eine lineare oder verzweigte Alkylkette mit 11 bis 30 Kohlenstoff-Atomen, gegebenenfalls mit mindestens einem Heteroatom, insbesondere mit mindestens einem Ether-Sauerstoff, oder für eine einfach oder mehrfach ungesättigte lineare oder verzweigte Kohlenwasserstoffkette mit 11 bis 30 Kohlenstoff-Atomen steht.

Beispiele für geruchsfreie Aldehyde der Formel (VI b) sind Veresterungsprodukte aus den bereits genannten 2,2-disubstituierten 3-Hydroxyaldehyden mit Carbonsäuren wie beispielsweise Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Fettsäuren aus der technischen Verseifung von natürlichen Ölen und Fetten, wie beispielsweise Rapsöl, Sonnenblumenöl, Leinöl, Ölbaumöl, Kokosnussöl, Ölpalmkernöl und Ölpalmöl, sowie technische Gemische von Fettsäuren, welche diese Säuren enthalten. Bevorzugte Aldehyde der Formel (VI b) sind 2,2-Dimethyl-3-lauroyloxypropanal, 2,2-Dimethyl-3-myristoyloxypropanal, 2,2-Dimethyl-3-palmitoyloxypropanal und 2,2-Dimethyl-3-stearoyloxypropanal. Besonders bevorzugt ist 2,2-Dimethyl-3-lauroyloxypropanal.

Bei der Aushärtung der Polyurethanzusammensetzung wird der zur Herstellung des Polyaldimins **ALD** verwendete Aldehyd frei. Viele Aldehyde weisen einen sehr intensiven Geruch auf, welcher während und, abhängig von der Flüchtigkeit des Aldehyds, auch nach der Aushärtung der Polyurethanzusammensetzung als störend empfunden werden kann. Zusammensetzungen, welche bei ihrer Aushärtung einen Geruch verursachen, sind deshalb, besonders in Innenräumen, nur eingeschränkt anwendbar. In der besonders bevorzugten Ausführungsform mit geruchsfreien Aldehyden werden Polyurethanzusammensetzungen erhalten, welche geruchsfrei aushärten.

Die Polyaldimine **ALD** der Formel (I) haben die Eigenschaft, dass sie keine tautomeren Enamine bilden können, da sie als Substituenten in α-Stellung zum C-Atom der Iminogruppe keinen Wasserstoff enthalten. Solche Aldimine bilden zusammen mit Isocyanatgruppen enthaltenden Polyurethanpolymeren **P** lagerfähige Gemische, auch wenn hochreaktive aromatische Isocyanatgruppen wie diejenigen von TDI und MDI vorhanden sind.

Ein Polyaldimin **ALD** ist in der Polyurethanzusammensetzung in einer stöchiometrischen oder unterstöchiometrischen Menge bezogen auf alle freien Isocyanatgruppen vorhanden, und zwar insbesondere in einer Menge von 0.3 bis 1.0, bevorzugt 0.4 bis 0.9, besonders bevorzugt 0.5 bis 0.8, Equivalent Aldimingruppen pro Equivalent Isocyanatgruppen.

Als Polyaldimin **ALD** können auch Mischungen verschiedener Polyaldimine verwendet werden, insbesondere auch Mischungen verschiedener Polyaldimine hergestellt mit Hilfe von verschiedenen Polyaminen der Formel (V), umgesetzt mit verschiedenen oder gleichen Aldehyden der Formel (VI). Es kann auch durchaus vorteilhaft sein, Mischungen von Polyaldiminen **ALD** einzusetzen, indem Mischungen von Di- und Triaminen der Formel (V) eingesetzt werden.

Es ist auch möglich, dass neben mindestens einem Polyaldimin **ALD** weitere Polyaldimine in der Zusammensetzung vorhanden sind. So ist es beispielsweise möglich, ein Polyamin der Formel (V) mit einer Mischung enthaltend ein Aldehyd der Formel (VI) und ein Dialdehyd umzusetzen. Ebenso ist es möglich, ein Aldehyd-Gemisch einzusetzen, welches neben einem Aldehyd der Formel (VI) weitere Aldehyde enthält. Es muss allerdings darauf geachtet werden, dass solche weiteren Polyamine oder Aldehyde in ihrer Art und Menge so gewählt werden, dass weder die Lagerstabilität noch die Tieftemperatureigenschaften der Zusammensetzung negativ beeinflusst werden.

Beispielsweise kann ein Aldehyd der Formel (VI) zusammen mit einem Aldehyd der Formel (VII) eingesetzt werden, 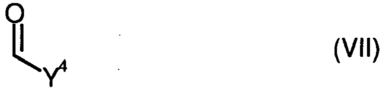 wobei Y⁴ entweder
für eine substituierte oder unsubstituierte Aryl- oder Heteroaryl-Gruppe steht, welche eine Ringgrösse zwischen 5 und 8, bevorzugt 6, Atomen aufweist; oder für 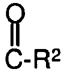 steht, wobei R² für ein Wasserstoffatom oder für eine Alkoxygruppe steht;
oder für eine substituierte oder unsubstituierte Alkenyl- oder Arylalkenylgruppe mit mindestens 6 C-Atomen steht.

Vorteilhaft enthält die Polyurethanzusammensetzung mindestens einen Füllstoff **F.** Der Füllstoff **F** beeinflusst sowohl die rheologischen Eigenschaften der nicht ausgehärteten Zusammensetzung, insbesondere die Verarbeitbarkeit, als auch die mechanischen Eigenschaften und die Oberflächenbeschaffenheit der ausgehärteten Zusammensetzung. Geeignete Füllstoffe **F** sind anorganische und organische Füllstoffe, zum Beispiel natürliche, gemahlene oder gefällte Calciumcarbonate, welche gegebenenfalls mit Stearaten beschichtet sind, Russe, calcinierte Kaoline, Aluminiumoxide, Kieselsäuren, PVC-Pulver oder Hohlkugeln. Bevorzugte Füllstoffe sind Calciumcarbonate.

Eine geeignete Menge Füllstoff **F** ist abhängig von der Korngrösse und vom spezifischen Gewicht des Füllstoffs. Eine typische Menge Calciumcarbonat mit einem mittleren Teilchendurchmesser im Bereich von 0.07 bis 7 µm liegt beispielsweise im Bereich von 10 bis 70 Gewichts-%, bevorzugt 20 bis 60 Gewichts-%, bezogen auf die Polyurethanzusammensetzung.

Es ist durchaus möglich und kann sogar von Vorteil sein, eine Mischung verschiedener Füllstoffe **F** einzusetzen. Es kann auch vorteilhaft sein, eine Mischung verschiedener Calciumcarbonat-Typen einzusetzen.

Des Weiteren ist es vorteilhaft, wenn die Polyurethanzusammensetzung mindestens einen Verdicker **V** enthält. Ein Verdicker **V** kann, im Zusammenspiel mit den andern in der Zusammensetzung anwesenden Komponenten, insbesondere dem Polyurethanpolymer **P** und gegebenenfalls einem Füllstoff **F,** die Konsistenz der Zusammensetzung verändern. Bevorzugt beeinflusst ein Verdicker **V** die Konsistenz der Zusammensetzung so, dass eine pastöse Masse mit strukturviskosen Eigenschaften erhalten wird, welche bei der Applikation eine gute Verarbeitbarkeit aufweist. Eine gute Verarbeitbarkeit für einen Fugendichtstoff besteht darin, dass das nicht ausgehärtete Material leicht aus der Verpackung - beispielsweise einer Kartusche - ausgepresst werden kann, dann eine gute Standfestigkeit und einen kurzen Fadenzug beim Unterbrechen der Applikation aufweist, und anschliessend leicht in die gewünschte Form modelliert werden kann (wird auch als Abglätten bezeichnet).

Geeignete Verdicker **V** sind beispielsweise Harnstoffverbindungen, Polyamidwachse, Bentonite oder pyrogene Kieselsäuren. Eine typische Einsatzmenge eines Verdickers **V,** beispielsweise in Form einer Harnstoffverbindung, liegt beispielsweise im Bereich von 0.5 bis 10 Gewichts-% bezogen auf die Polyurethanzusammensetzung. Ein Verdicker **V** kann auch als Paste in beispielsweise einem Weichmacher zum Einsatz kommen.

Es kann vorteilhaft sein, eine Kombination von mehreren Verdickern **V** zu verwenden, um die Konsistenz der Zusammensetzung zu optimieren.

Die einkomponentige feuchtigkeitshärtende Polyurethanzusammensetzung kann zusätzlich zu mindestens einem Isocyanatgruppen enthaltenden Polyurethanpolymer **P,** mindestens einem Polyaldimin **ALD,** gegebenenfalls mindestens einem Füllstoff F und gegebenenfalls mindestens einem Verdicker V weitere Komponenten enthalten.

Der Katalysator **K,** welcher die Hydrolyse des Polyaldimins **ALD** beschleunigt, ist eine organische Carbonsäure, bevorzugt Benzoesäure oder Salicylsäure, ein organisches Carbonsäureanhydrid, wie Phthalsäureanhydrid oder Hexahydrophthalsäureanhydrid, ein Silylester organischer Carbonsäuren, eine organische Sulfonsäure wie p-Toluolsulfonsäure oder 4-Dodecylbenzolsulfonsäure, ein Sulfonsäureester oder eine andere organische oder anorganische Säure, oder eine Mischungen der vorgenannten Säuren und Säureester.

Der Gehalt an Katalysator **K** beträgt 0.005 bis 2 Gewichts-%, bezogen auf die gesamte Polyurethanzusammensetzung, wobei dem Fachmann klar ist, welche Einsatzmengen für welche Katalysatoren sinnvoll sind.

Weiterhin kann die Zusammensetzung Katalysatoren enthalten, welche die Reaktion der Isocyanatgruppen mit Wasser beschleunigen, beispielsweise Organozinnverbindungen wie Dibutylzinndilaurat, Dibutylzinndichlorid, Dibutylzinndiacetylacetonat, Bismut-organische Verbindungen oder Bismut-Komplexe, oder amingruppenhaltige Verbindungen wie beispielsweise 2,2'-Dimorpholinodiethylether oder 1,4-Diazabicyclo[2.2.2]octan, oder andere, in der Polyurethanchemie übliche, Katalysatoren für die Reaktion der Isocyanatgruppen.

Es kann vorteilhaft sein, wenn in der Polyurethanzusammensetzung eine Mischung aus mehreren Katalysatoren vorhanden ist, insbesondere ein Gemisch aus einer Säure und einer metallorganischen Verbindung oder einem Metallkomplex, aus einer Säure und einer amingruppenhaltigen Verbindung, oder ein Gemisch aus einer Säure, einer metallorganischen Verbindung oder einem Metallkomplex, und einer amingruppenhaltigen Verbindung.

Des Weiteren können als weitere Komponenten unter anderem die folgenden Hilfs- und Zusatzmittel vorhanden sein:
- Weichmacher, beispielsweise Ester organischer Carbonsäuren oder deren Anhydride, wie Phthalate, wie beispielsweise Dioctylphthalat oder Diisodecylphthalat, Adipate, wie zum Beispiel Dioctyladipat, und Sebacate, organische Phosphor- und Sulfonsäureester oder Polybutene;
- Lösemittel, beispielsweise Ketone wie Aceton, Methylethylketon, Diisobutylketon, Acetonylaceton, Mesityloxid, sowie cyclische Ketone wie Methylcyclohexanon und Cyclohexanon; Ester wie Ethylacetat, Propylacetat oder Butylacetat, Formiate, Propionate oder Malonate; Ether wie Ketonether, Esterether und Dialkylether wie Diisopropylether, Diethylether, Dibutylether, Diethylenglykoldiethylether sowie Ethylenglykoldiethylether; aliphatische und aromatische Kohlenwasserstoffe wie Toluol, Xylol, Heptan, Octan sowie unterschiedliche Erdölfraktionen wie Naphtha, White Spirit, Petrolether oder Benzin; halogenierte Kohlenwasserstoffe wie Methylenchlorid; sowie N-alkylierte Lactame wie beispielsweise N-Methylpyrrolidon, N-Cyclohexylpyrrolidon oder N-Dodecylpyrrolidon;

- Fasern, beispielsweise aus Polyethylen;
- Pigmente, beispielsweise Titandioxid;
- weitere in der Polyurethanchemie übliche Katalysatoren;
- Reaktiwerdünner und Vernetzer, beispielsweise Polyisocyanate wie MDI, PMDI, TDI, HDI, 1,12-Dodecamethylendiisocyanat, Cyclohexan-1,3- oder 1,4-diisocyanat, IPDI, Perhydro-2,4'- und -4,4'-diphenylmethandiisocyanat, 1,3- und 1,4-Tetramethylxylylendiisocyanat, Oligomere und Polymere dieser Polyisocyanate, insbesondere Isocyanurate, Carbodiimide, Uretonimine, Biurete, Allophanate und Iminooxadiazindione der genannten Polyisocyanate, Addukte von Polyisocyanaten mit kurzkettigen Polyolen, sowie Adipinsäuredihydrazid und andere Dihydrazide;
- Trocknungsmittel, wie beispielsweise p-Tosylisocyanat und andere reaktive Isocyanate, Orthoameisensäureester, Calciumoxid; Vinyltrimethoxysilan oder andere schnell hydrolysierende Silane wie beispielsweise Organoalkoxysilane, welche in α-Stellung zur Silangruppe eine funktionelle Gruppe aufweisen, oder Molekularsiebe;
- Haftvermittler, insbesondere Silane wie beispielsweise Epoxysilane, Vinylsilane, (Meth)acrylsilane, Isocyanatosilane, Carbamatosilane, S-(Alkyl-carbonyl)-mercaptosilane und Aldiminosilane, sowie oligomere Formen dieser Silane;
- Stabilisatoren gegen Wärme, Licht- und UV-Strahlung;
- flammhemmende Substanzen;
- oberflächenaktive Substanzen wie beispielsweise Netzmittel, Verlaufsmittel, Entlüftungsmittel oder Entschäumer;
- Biozide wie beispielsweise Algizide, Fungizide oder das Pilzwachstum hemmende Substanzen;
sowie weitere üblicherweise in einkomponentigen Polyurethanzusammensetzungen eingesetzte Substanzen.

Es ist vorteilhaft, darauf zu achten, dass sowohl das Polyaldimin **ALD** und der vorhandene Katalysator **K,** als auch ein gegebenenfalls vorhandener Füllstoff **F,** ein gegebenenfalls vorhandener Verdicker **V** sowie alle weiteren in der Zusammensetzung enthaltenen Komponenten die Lagerstabilität nicht beeinträchtigen. Das heisst, dass sie während der Lagerung die zur Vernetzung führenden Reaktionen wie Hydrolyse der Aldimingruppen oder Vernetzung der Isocyanatgruppen nicht in signifikantem Ausmass auslösen dürfen. Insbesondere bedeutet dies, dass all diese Komponenten kein oder höchstens Spuren von Wasser enthalten sollten. Es kann sinnvoll sein, gewisse Komponenten vor dem Einmischen in die Zusammensetzung chemisch oder physikalisch zu trocknen. Insbesondere geeignet zum Trocknen der Füllstoffe sind Polyisocyanate wie TDI, MDI, IPDI, HDI sowie deren oligomere Formen. Die Füllstoffe können damit vor dem Einmischen oder in situ der feuchtigkeitshärtenden Zusammensetzung getrocknet werden.

Die einkomponentige feuchtigkeitshärtende Zusammensetzung enthält Isocyanatgruppen. Sie weist einen Gehalt an Isocyanatgruppen (NCO-Gehalt) von maximal 3.5 Gewichts-%, insbesondere von 0.2 bis 3.5 Gewichts-%, auf, bezogen auf die Summe der in der Zusammensetzung enthaltenen Isocyanatgruppen-haltigen Bestandteile. Sind also in der Zusammensetzung zusätzlich zum Polyurethanpolymer **P** weitere Isocyanatgruppen enthaltende Verbindungen vorhanden, beispielsweise monomere oder oligomere Di- oder Polyisocyanate, so soll der gesamte NCO-Gehalt höchstens 3.5 Gewichts-% betragen, bezogen auf das gesamte Gewicht des Polyurethanpolymers **P** und dieser weiteren Isocyanatgruppen enthaltenden Verbindungen. Aufgrund des geringen NCO-Gehaltes von maximal 3.5 Gewichts-%, insbesondere im Bereich von 0.2 bis 3.5 Gewichts-%, der Isocyanatgruppen enthaltenden Bestandteile weist die Zusammensetzung im ausgehärteten Zustand weichelastische Eigenschaften auf. Enthält die Zusammensetzung zusätzlich zum Polyurethanpolymer **P** soviel monomeres oder oligomeres Di- oder Polyisocyanat, dass der NCO-Gehalt zusammen mit dem Polyurethanpolymer **P** höher liegt als 3.5 Gewichts-%, so enthält die Zusammensetzung im ausgehärteten Zustand einen zu hohen Anteil an Harnstoffgruppen. Ein zu hoher Anteil an Harnstoffgruppen in der ausgehärteten Zusammensetzung erhöht die Dehnspannung im Bereich bis 100% Dehnung jedoch über das für einen Einsatz als weichelastischer Dichtstoff gebührliche Mass.

Bevorzugt enthält die Zusammensetzung 0.5 bis 3.0 Gewichts-% NCO-Gruppen bezogen auf die Summe der in der Zusammensetzung enthaltenen Isocyanatgruppen-haltigen Bestandteile.

Die beschriebene einkomponentige feuchtigkeitshärtende Zusammensetzung wird unter Ausschluss von Feuchtigkeit hergestellt und aufbewahrt. Sie ist lagerstabil, d.h. sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Die Aldimingruppen des Polyaldimins **ALD** haben die Eigenschaft, bei Kontakt mit Feuchtigkeit zu hydrolysieren. Die in der Zusammensetzung vorhandenen Isocyanatgruppen reagieren formal mit dem frei werdenden Polyamin der Formel (V), wobei die entsprechenden Aldehyde der Formel (VI) frei werden. Im Verhältnis zu den Aldimingruppen überschüssige Isocyanatgruppen reagieren mit dem vorhandenen Wasser. Als Ergebnis dieser Reaktionen härtet die Zusammensetzung schliesslich aus; dieser Prozess wird auch als Vernetzung bezeichnet. Die Reaktion der Isocyanatgruppen mit dem hydrolysierenden Polyaldimin **ALD** muss dabei nicht notwendigerweise über das Polyamin erfolgen. Selbstverständlich sind auch Reaktionen mit Zwischenstufen der Hydrolyse des Polyaldimins **ALD** zum Polyamin möglich. Beispielsweise ist es denkbar, dass das hydrolysierende Polyaldimin **ALD** in der Form eines Halbaminals direkt mit den Isocyanat-gruppen reagiert.

Das für die Aushärtungsreaktion benötigte Wasser kann entweder aus der Luft stammen (Luftfeuchtigkeit), oder aber die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird.

Die beschriebene Polyurethanzusammensetzung härtet bei Kontakt mit Feuchtigkeit aus. Die Hautbildungszeit und die Aushärtungsgeschwindigkeit lassen sich durch die Beigabe eines Katalysators steuern.

Im ausgehärteten Zustand verfügt die Zusammensetzung über weichelastische Eigenschaften. Das heisst, sie weist einerseits eine tiefe Spannung bei 100% Dehnung auf, typischerweise < 1 MPa, und andererseits verfügt sie über eine sehr hohe Dehnbarkeit mit einer Bruchdehnung von typischerweise > 500 %, und ein gutes Rückstellvermögen, typischerweise > 70 %. Herausragend ist aber der Umstand, dass die Dehnspannung sowohl bei Raumtemperatur als auch in der Kälte, zum Beispiel bei -20 °C, nahezu gleichbleibend tief ist. Die Spannung bei 100% Dehnung zwischen Raumtemperatur und -20 °C verändert sich vorzugsweise nur um einen Faktor im Bereich von < 1.5, das heisst σ_{100%(20°C)}/ σ_{100%(RT)} < 1.5. Dies ist für eine Polyurethanzusammensetzung ein überraschend niedriger Wert. Isocyanatgruppen enthaltende Polyurethanzusammensetzungen nach dem Stand der Technik, welche Polyaldimine mit einem Amin-Equivalentgewicht des entsprechenden Polyamins von < 180 g/Eq enthalten, weisen typischerweise einen entsprechenden Faktor von gegen 2 bis sogar 3 auf.

Diese in der Kälte gleichbleibend tiefe Dehnspannung der beschriebenen Polyurethanzusammensetzungen bedeutet einen Fortschritt im Einsatzgebiet der weichelastischen Dichtstoffe für Bewegungsfugen im Aussenbereich von Bauwerken. Sogenannte Bewegungsfugen sind Fugen, welche an geeigneten Stellen und in geeigneter Breite in Bauwerken vorhanden sind, um Bewegungen von starren Baumaterialien wie Beton, Stein, Kunststoff und Metall gegeneinander zu ermöglichen. Insbesondere in der Kälte ziehen sich die Materialien zusammen, wodurch sich die Fugen öffnen. Ein Dichtstoff, der die Fuge abdichtet, wird also in der Kälte gedehnt. Um die Fuge dauerhaft abzudichten, soll der Dichtstoff keine zu hohe Dehnspannung im Bereich bis 100% Dehnung aufweisen. Die speziellen Anforderungen an Fugendichtstoffe für den Hochbau sind in Normen festgelegt, beispielsweise in der ISO-Norm 11600, wobei für weichelastische Dichtstoffe die Spannung im tiefen Dehungsbereich bis 100% bei Raumtemperatur und bei -20 °C nicht zu hoch sein darf. Durch die nahezu gleichbleibend tiefe Dehnspannung in der Kälte und bei Raumtemperatur ist das Formulieren eines Dichtstoffes nach ISO 11600 mit den beschriebenen Zusammensetzungen wesentlich erleichtert.

Die beschriebenen einkomponentigen feuchtigkeitshärtenden Zusammensetzungen sind im ausgehärteten Zustand alterungsbeständig. Das heisst, die mechanischen Eigenschaften verändern sich nach einer Alterung, auch nach einer beschleunigt herbeigeführten Alterung, nicht in einem für ihren Gebrauch relevanten Ausmass. Insbesondere verändert sich die 100%-Dehnspannung der Zusammensetzung nur in geringem Ausmass, wenn das Material einer Vorbehandlung wie in ISO 8339 Verfahren B unterzogen wird, das heisst einem Wechselzyklus zwischen trockener Wärme bei 70 °C und Eintauchen in destilliertes Wasser bei Raumtemperatur, oder einem entsprechenden Wechselzyklus zwischen trockener Wärme bei 70 °C und Eintauchen in wässrige gesättigte Calciumhydroxid-Lösung bei Raumtemperatur.

In der Anwendung insbesondere als Dichtstoff wird die Zusammensetzung zwischen zwei Substrate **S1** und **S2** appliziert und anschliessend erfolgt die Aushärtung. Üblicherweise wird der Dichtstoff in eine Fuge eingepresst.

Das Substrat **S1** kann gleich oder verschieden von Substrat **S2** sein.

Geeignete Substrate **S1** oder **S2** sind beispielsweise anorganische Substrate wie Glas, Glaskeramik, Beton, Mörtel, Backstein, Ziegel, Gips und Natursteine wie Granit oder Marmor; Metalle oder Legierungen wie Aluminium, Stahl, Buntmetalle, verzinkte Metalle; organische Substrate wie Holz, Kunststoffe wie PVC, Polycarbonate, PMMA, Polyester, Epoxidharze; beschichtete Substrate wie pulverbeschichtete Metalle oder Legierungen; sowie Farben und Lacke.

Die Substrate können bei Bedarf vor dem Applizieren des Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.

Nach dem Abdichten der Substrate **S1** und **S2** mittels einer erfindungsgemässen Zusammensetzung wird ein abgedichteter Artikel erhalten. Ein derartiger Artikel kann ein Bauwerk, insbesondere ein Bauwerk des Hoch- oder Tiefbaus, oder ein Teil davon, beispielsweise ein Fenster oder ein Fussboden, sein, oder ein derartiger Artikel kann ein Transportmittel, insbesondere ein Fahrzeug zu Wasser oder zu Lande, oder ein Teil davon, sein.

Die beschriebene Zusammensetzung weist vorzugsweise eine pastöse Konsistenz mit strukturviskosen Eigenschaften auf. Ein solcher pastöser Dichtstoff wird mittels einer geeigneten Vorrichtung zwischen die Substrate **S1** und **S2** appliziert. Geeignete Methoden zum Auftragen eines pastösen Dichtstoffes sind beispielsweise die Applikation aus handelsüblichen Kartuschen, welche bevorzugt manuell betrieben werden. Eine Applikation mittels Druckluft aus einer handelsüblichen Kartusche oder aus einem Fass oder Hobbock mittels einer Förderpumpe oder eines Extruders, gegebenenfalls mittels eines Applikations-Roboters, ist ebenfalls möglich.

### Beispiele

### Beschreibung der Prüfmethoden

Die **Viskosität** wurde auf einem thermostatisierten Kegel-Platten-Viskosimeter Physica UM (Kegeldurchmesser 20 mm, Kegelwinkel 1°, Kegelspitze-Platten-Abstand 0.05 mm, Schergeschwindigkeit 10 bis 1000 s⁻¹) gemessen.

Das **Amin-Equivlalentgewicht** der Polyamine und der **Gehalt an Aldiminogruppen** der hergestellten Polyaldimine ("**Amin-Gehalt**") wurden titrimetrisch bestimmt (mit 0.1N HClO₄ in Eisessig, gegen Kristallviolett). Der Gehalt an Aldiminogruppen ist angegeben als Amin-Gehalt in mmol NH₂/g.

Die **Hautbildungszeit** (Zeit bis zur Klebefreiheit, "tack-free time") wurde bestimmt bei 23 °C und 50% relativer Luftfeuchtigkeit.

Die Shore **A -** Härte wurde bestimmt nach DIN 53505.

Die **Zugfestigkeit** und die **Bruchdehnung** wurden bestimmt nach DIN 53504 (Zuggeschwindigkeit: 200 mm/min) an während 14 Tagen im Normklima (23±1 °C, 50±5% relative Luftfeuchtigkeit) ausgehärteten Filmen mit einer Schichtdicke von 2 mm.

Die **Spannung bei 100 % Dehnung** wurde bestimmt nach DIN EN 28339 und als "σ_{100%(-20°C)}" (gemessen bei -20°C) bzw. "σ_{100%(RT)} (gemessen bei Raumtemperatur, 23°C) bezeichnet. Bei der Herstellung der Prüfkörper wurden die Haftflächen mit Sika^{®} Primer-3 vorbehandelt. Vor dem Zugversuch wurden die Prüflinge während 14 Tagen im Normklima gelagert.

### Verwendete Rohstoffe

| | |
|---|---|
| Acclaim^{®} 4200N | Bayer; low monol Polyoxypropylendiol, mittleres Molekulargewicht ca. 4'000 g/mol, OH-Zahl 28 mg KOH/g, Wassergehalt 0.02% |
| Voranol^{®} CP 4755 | Dow Chemical; Ethylenoxid-terminiertes Polyoxypropylentriol, mittleres Molekulargewicht ca. 4'700 g/mol, OH-Zahl 35 mg KOH/g, Wassergehalt 0.02% |
| Desmodur^{®} T-80 P | Bayer; 2,4- und 2,6-Toluylendiisocyanat im Verhältnis 80:20, NCO-Equivalentgewicht 87 g/Eq |
| Jeffcat^{®} TD-33A | Huntsman; 33% 1,4-Diazabicyclo[2.2.2]octan in Di-propylenglykol |
| Jeffamine^{®} D-230 | Huntsman;. alpha, omega-Polyoxypropylendiamin, Amin-Equivalentgewicht 119 g/Eq |
| Jeffamine^{®} D-400 | Huntsman;. alpha, omega-Polyoxypropylendiamin, Amin-Equivalentgewicht 221 g/Eq |
| Jeffamine^{®} D-2000 | Huntsman;. alpha, omega-Polyoxypropylendiamin, Amin-Equivalentgewicht 980 g/Eq |
| Jeffamine^{®} T-5000 | Huntsman; Polyoxypropylentriamin, Amin-Equivalentgewicht 1870 g/Eq |
| Geniosil^{®} GF 80 | Wacker; (3-Glycidoxypropyl)trimethoxysilan |

### a) Herstellung der Polyurethanpolymere

### Polymer P1

Unter Feuchtigkeitsausschluss wurden 1000 g Polyol Acclaim^{®} 4200N, 500 g Voranol^{®} CP 4755, 124.3 g Desmodur^{®} T-80 P und 1.5 g Jeffcat^{®} TD-33A bei 80 °C gerührt, bis der Isocyanatgehalt der Mischung einen konstanten Wert von 1.5 % aufwies. Das erhaltene Polymer wurde auf Raumtemperatur abgekühlt und unter Ausschluss von Feuchtigkeit aufbewahrt. Es hatte eine Viskosität von 20 Pa s bei 20 °C.

### Polymer P2

Unter Feuchtigkeitsausschluss wurden 1000 g Polyol Acclaim^{®} 4200N, 2000 g Voranol^{®} CP 4755, 385 g Diisodecylphthalat, 461.4 g 4,4'-Diphenylmethan-diisocyanat (mit einem NCO-Equivalentgewicht von 125.6 g/Eq) und 0.35 g Jeffcat^{®} TD-33A bei 80 °C gerührt, bis der Isocyanatgehalt der Mischung einen konstanten Wert von 2.0 % aufwies. Das erhaltene Polymer wurde auf Raumtemperatur abgekühlt und unter Ausschluss von Feuchtigkeit aufbewahrt. Es hatte eine Viskosität von 57 Pas bei 20 °C.

### b) Herstellung der Polyaldimine

### Polyaldimin ALD1 (Vergleich)

In einem Rundkolben wurden unter Stickstoffatmosphäre 230.34 g (2.17 mol) Benzaldehyd vorgelegt. Unter kräftigem Rühren wurden aus einem Eintropftrichter langsam 250.00 g (2.10 mol NH₂) Jeffamine^{®} D-230 zugegeben. Danach wurden bei 80 °C die flüchtigen Bestandteile im Vakuum vollständig abdestilliert. Es wurden 439.6 g gelbliches, bei Raumtemperatur flüssiges Reaktionsprodukt erhalten mit einem Aldimin-Gehalt, bestimmt als Amin-Gehalt, von 4.77 mmol NH₂/g.

### Polyaldimin ALD2 (Vergleich)

In einem Rundkolben wurden unter Stickstoffatmosphäre 123.34 g (1.16 mol) Benzaldehyd vorgelegt. Unter kräftigem Rühren wurden aus einem Eintropftrichter langsam 250.00 g (1.13 mol NH₂) Jeffamine^{®} D-400 zugegeben. Danach wurden bei 80 °C die flüchtigen Bestandteile im Vakuum vollständig abdestilliert. Es wurden 350.9 g gelbliches, bei Raumtemperatur flüssiges Reaktionsprodukt erhalten mit einem Aldimin-Gehalt, bestimmt als Amin-Gehalt, von 3.20 mmol NH₂/g.

### Polyaldimin ALD3 (Vergleich)

In einem Rundkolben wurden unter Stickstoffatmosphäre 27.87 g (0.263 mol) Benzaldehyd vorgelegt. Unter kräftigem Rühren wurden aus einem Eintropftrichter langsam 250.00 g (0.255 mol NH₂) Jeffamine^{®} D-2000 zugegeben. Danach wurden bei 80 °C die flüchtigen Bestandteile im Vakuum vollständig abdestilliert. Es wurden 272.3 g gelbliches, bei Raumtemperatur flüssiges Reaktionsprodukt erhalten mit einem Aldimin-Gehalt, bestimmt als Amin-Gehalt, von 0.93 mmol NH₂/g.

### Polyaldimin ALD4

In einem Rundkolben wurden unter Stickstoffatmosphäre 76.23 g (0.268 mol) 2,2-Dimethyl-3-lauroyloxy-propanal vorgelegt. Unter kräftigem Rühren wurden aus einem Eintropftrichter langsam 250.00 g (0.255 mol NH₂) Jeffamine^{®} D-2000 zugegeben. Danach wurden bei 80 °C die flüchtigen Bestandteile im Vakuum vollständig abdestilliert. Es wurden 321.2 g gelbliches, bei Raumtemperatur flüssiges Reaktionsprodukt erhalten mit einem Aldimin-Gehalt, bestimmt als Amin-Gehalt, von 0.79 mmol NH₂/g.

### Polyaldimin ALD5

In einem Rundkolben wurden unter Stickstoffatmosphäre 63.91 g (0.225 mol) 2,2-Dimethyl-3-lauroyloxy-propanal vorgelegt. Unter kräftigem Rühren wurden aus einem Eintropftrichter langsam 400.00 g (0.214 mol NH₂) Jeffamine^{®} T-5000 zugegeben. Danach wurden bei 80 °C die flüchtigen Bestandteile im Vakuum vollständig abdestilliert. Es wurden 459.43 g gelbliches, bei Raumtemperatur flüssiges Reaktionsprodukt erhalten mit einem Aldimin-Gehalt, bestimmt als Amin-Gehalt, von 0.46 mmol NH₂/g.

### c) Herstellung der Harnstoff-Verdicker-Paste

In einem Vakuummischer wurden 1000 g Diisodecylphthalat und 160 g 4,4'-Diphenylmethandiisocyanat vorgelegt und leicht aufgewärmt. Dann wurden unter starkem Rühren 90 g Monobutylamin langsam zugetropft. Die entstehende weisse Paste wurde unter Vakuum und Kühlung eine Stunde weitergerührt. Die Harnstoff-Verdicker-Paste enthält 20 %-Gewicht Harnstoff-Verdicker in 80 %-Gewicht Diisodecylphthalat.

### d) Herstellung der Dichtstoff-Zusammensetzungen

In einem Vakuum-Mischer wurden die in der Tabelle 1 angegebenen Rohstoffe der Beispiele 1 bis 6 jeweils zu einer homogenen Paste verarbeitet, welche unter Ausschluss von Feuchtigkeit aufbewahrt wurde.
Die Resultate der Beispiele 1 bis 6 sind ebenfalls in Tabelle 1 aufgeführt.

### e) Diskussion der Resultate der Beispiele 1 bis 6

Das Beispiel 1 ist ein Vergleichsbeispiel. Es enthält Polyaldimin ALD1, bei welchem es sich um ein nicht-erfindungsgemässes Polyaldimin handelt, abgeleitet von Jeffamin^{®} D-230, welches ein Amin-Equivalentgewicht von 119 g/Eq aufweist. Die bei Raumtemperatur gemessenen Werte entsprechen zwar einem Material mit weichelastischen Eigenschaften; der Anstieg der Spannung bei 100% Dehnung zwischen Raumtemperatur und -20 °C und ist mit einem Faktor von 1.88 aber zu hoch.

Die Beispiele 2 bis 6 sind erfindungsgemässe Beispiele, welche das erwünschte Tieftemperaturverhalten aufweisen. Die Werte für die Spannung bei 100% Dehnung sind bei Raumtemperatur und bei -20 °C deutlich näher beieinander. Das Verhältnis der Dehnspannungswerte zwischen -20 °C und Raumtemperatur ist deutlich tiefer als bei Beispiel 1.

**Tabelle 1: Zusammensetzung und Prüfergebnisse der Klebstoffe der Beispiele 1 bis 6. Die Mengenangaben sind in Gewichtsteilen.**

| **Beispiel** | **1** (Vgl.) | **2** (Vgl.) | **3** (Vgl.) | **4** | **5** | **6** |
|---|---|---|---|---|---|---|
| Kreide | 310.0 | 300.0 | 210.0 | 388.0 | 230.0 | 210.0 |
| PVC-Pulver | 100.0 | 100.0 | 100.0 | - | 100.0 | 100.0 |
| Titandioxid | 20.0 | 20.0 | 20.0 | 20.0 | 20.0 | 20.0 |
| Desmodur^{®} T-80 P | 2.75 | 2.75 | 2.75 | 2.44 | 2.75 | 2.44 |
| Harnstoff-Verdicker-Paste | 202.0 | 202.0 | 202.0 | 299.0 | 200.0 | 220.0 |
| Salicylsäure ¹ | 12.0 | 12.0 | 12.0 | 15.0 | 12.0 | 15.0 |
| Polymer P1 | 325.0 | 325.0 | 325.0 | 180.0 | 220.0 | 240.0 |
| Polymer P2 | | - | - | - | 70.0 | - |
| Geniosil^{®} GF 80 | 2.0 | 2.0 | 2.0 | 2.0 | 2.0 | 2.0 |
| Polyaldimin ALD1 | 24.0 | - | - | - | - | - |
| Polyaldimin ALD2 | - | 36.0 | - | - | - | - |
| Polyaldimin ALD3 | - | - | 124.7 | - | - | - |
| Polyaldimin ALD4 | - | - | - | 90.0 | 147.0 | - |
| Polyaldimin ALD5 | - | - | - | - | - | 209.3 |
| NCO-Gehalt [Gew.%] ² | 1.9 | 1.9 | 1.9 | 2.1 | 2.1 | 2.0 |
| Hautbildungszeit [min] | 50 | 30 | 35 | 20 | 9 | 30 |
| Shore A | 39 | 38 | 28 | 25 | 24 | 42 |
| Zugfestigkeit [MPa] | 1.3 | 2.5 | 1.9 | 0.9 | 2.2 | 1.5 |
| Bruchdehnung [%] | 700 | 1100 | 1400 | 1050 | 1300 | 720 |
| σ_{100%(RT)} [MPa] | 0.65 | 0.68 | 0.41 | 0.42 | 0.34 | 0.8 |
| σ_{100%(-20°C)} [MPa] | 1.22 | 0.97 | 0.52 | 0.54 | 0.45 | 1.0 |
| σ_{100%(-20°C)}/ σ_{100%(RT)} | 1.88 | 1.43 | 1.27 | 1.29 | 1.32 | 1.25 |

| | | | | | | |
|---|---|---|---|---|---|---|
| ¹ 5.0 Gewichts-% in Dioctyladipat; ² NCO-Gehalt der Zusammensetzung in Gewichts-% bezogen auf die Summe der in der Zusammensetzung enthaltenen NCOhaltigen Bestandteile; | | | | | | |

## Patentansprüche

1. Einkomponentige feuchtigkeitshärtende Zusammensetzung umfassend
a) mindestens ein Isocyanatgruppen enthaltendes Polyurethanpolymer P, welches ein mittleres Molekulargewicht von mindestens 4000 g/mol aufweist, und
b) mindestens ein Polyaldimin ALD der Formel (I), 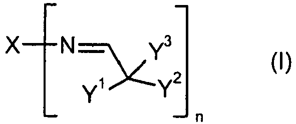
wobei X für den Rest eines n-funktionellen Polyamins mit aliphatischen primären Aminogruppen und einem mittleren Amin-Equivalentgewicht von mindestens 180g/Eq, bevorzugt mindestens 220 g/Eq, nach Entfernung von n Aminogruppen steht;
n für 2 oder 3 steht,
Y¹ und Y² entweder, unabhängig voneinander, je für einen einwertigen Kohlenwasserstoffrest mit 1 bis 12 C-Atomen stehen, oder zusammen einen zweiwertigen Kohlenwasserstoffrest mit 4 bis 20 C-Atomen bilden, der Teil eines, gegebenenfalls substituierten, carbocyclischen Rings mit 5 bis 8, bevorzugt 6, C-Atomen, ist, und
Y³ für einen Rest der Formel (IV) steht 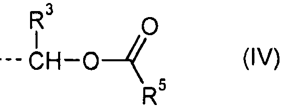
wobei R³ für ein Wasserstoffatom oder für eine Alkyl- oder Arylalkylgruppe und
R⁵ entweder für eine lineare oder verzweigte Alkylkette mit 11 bis 30 Kohlenstoff-Atomen, gegebenenfalls mit mindestens einem Heteroatom, insbesondere mit mindestens einem Ether-Sauerstoff,
oder für eine einfach oder mehrfach ungesättigte lineare oder verzweigte Kohlenwasserstoffkette mit 11 bis 30 Kohlenstoff-Atomen steht;
wobei der Gehalt an Isocyanatgruppen höchstens 3.5 Gewichts-% beträgt, bezogen auf die Summe der in der Zusammensetzung enthaltenen Isocyanatgruppen-haltigen Bestandteile;
sowie weiterhin mindestens einen Katalysator **K** enthält, welcher die Hydrolyse der Aldimingruppen beschleunigt und welcher eine organische Carbonsäure, ein organisches Carbonsäureanhydrid, ein Silylester einer organischen Carbonsäure, eine organische Sulfonsäure, ein Sulfonsäureester oder eine andere organische oder anorganische Säure ist, und dessen Gehalt 0.005 bis 2 Gewichts-%, bezogen auf die gesamte Polyurethanzusammensetzung, beträgt.

2. Einkomponentige feuchtigkeitshärtende Zusammensetzung gemäss Anspruch 1, **dadurch gekennzeichnet, dass** der Katalysator **K** Benzoesäure oder Salicylsäure ist.

3. Einkomponentige feuchtigkeitshärtende Zusammensetzung gemäss Anspruch 1 oder 2, **dadurch gekennzeichnet, dass** X in Formel (I) für einen Polyoxyalkylenrest, insbesondere für einen Polyoxypropylen- oder einen Polyoxybutylenrest, steht, wobei diese Reste jeweils auch Anteile von anderen Oxyalkylen-Gruppen enthalten können.

4. Einkomponentige feuchtigkeitshärtende Zusammensetzung gemäss einem der vorhergehenden Ansprüche, **dadurch gekennzeichnet, dass** das Polyurethanpolymer **P** erhalten wird aus einer Umsetzung von mindestens einem Polyisocyanat mit mindestens einem Polyol, wobei das NCO/OH-Verhältnis einen Wert von höchstens 2.5, insbesondere höchstens 2.2, aufweist.

5. Einkomponentige feuchtigkeitshärtende Zusammensetzung gemäss Anspruch 4, **dadurch gekennzeichnet, dass** das Polyol ein Polyoxyalkylenpolyol, insbesondere ein Polyoxypropylendiol oder -triol oder ein Ethylenoxid-terminiertes Polyoxypropylendiol oder -triol, ist.

6. Einkomponentige Zusammensetzung gemäss Anspruch 4 oder 5, **dadurch gekennzeichnet, dass** das Polyol ein Molekulargewicht von 1'000 bis 30'000 g/mol und einen Ungesättigtheitsgrad von tiefer als 0.02 mEq/g aufweist.

7. Einkomponentige feuchtigkeitshärtende Zusammensetzung gemäss einem der vorhergehenden Ansprüche, **dadurch gekennzeichnet, dass** das Polyurethanpolymer **P** in einer Menge von 10 - 80 Gewichts-%, bevorzugt in einer Menge von 15 - 50 Gewichts-%, bezogen auf die gesamte Polyurethanzusammensetzung, vorhanden ist.

8. Einkomponentige feuchtigkeitshärtende Zusammensetzung gemäss einem der vorhergehenden Ansprüche, **dadurch gekennzeichnet, dass** das Polyaldimin **ALD** in einer Menge von 0.3 bis 1.0, bevorzugt von 0.4 bis 0.9, besonders bevorzugt 0.5 bis 0.8, Equivalent Aldimingruppen pro Equivalent Isocyanatgruppen in der Zusammensetzung vorhanden ist.

9. Einkomponentige feuchtigkeitshärtende Zusammensetzung gemäss einem der vorhergehenden Ansprüche, **dadurch gekennzeichnet, dass** sie zusätzlich mindestens einen Füllstoff **F,** insbesondere Calciumcarbonat, umfasst.

10. Einkomponentige feuchtigkeitshärtende Zusammensetzung gemäss einem der vorhergehenden Ansprüche, **dadurch gekennzeichnet, dass** sie zusätzlich mindestens einen Verdicker **V** umfasst.

11. Verwendung einer Zusammensetzung gemäss einem der Ansprüche 1 bis 10 als Dichtstoff.

12. Verfahren des Abdichtens umfassend die Schritte
(i) Applikation einer Zusammensetzung gemäss einem der Ansprüche 1 bis 10 zwischen ein Substrat **S1** und ein Substrat **S2,**
(ii) Aushärtung der Zusammensetzung durch Kontakt mit Feuchtigkeit, wobei die Substrate **S1** und **S2** gleich oder verschieden voneinander sind.

13. Verfahren gemäss Anspruch 12, **dadurch gekennzeichnet, dass** mindestens eines der Substrate **S1** oder **S2** Glas, Glaskeramik, Beton, Mörtel, Backstein, Ziegel, Gips, ein Naturstein wie Granit oder Marmor; ein Metall oder eine Legierung wie Aluminium, Stahl, Buntmetall, verzinktes Metall; ein Holz, ein Kunststoff wie PVC, Polycarbonat, PMMA, Polyester, Epoxidharz; eine Pulverbeschichtung, eine Farbe oder ein Lack, insbesondere ein Automobillack, ist.

14. Abgedichteter Artikel, welcher mittels eines Verfahrens zur Abdichtung gemäss einem der Ansprüche 12 oder 13 hergestellt wird.

15. Abgedichteter Artikel gemäss Anspruch 14, **dadurch gekennzeichnet, dass** der Artikel ein Bauwerk, insbesondere ein Bauwerk des Hoch- oder Tiefbaues, oder ein Teil davon oder ein Transportmittel, insbesondere ein Fahrzeug zu Wasser oder zu Lande, oder ein Teil davon ist.

16. Verwendung des Polyaldimins **ALD** der Formel (I), wie er in einer einkomponentigen feuchtigkeitshärtenden Zusammensetzung gemäss einem der Ansprüche 1 bis 10 enthalten ist, in Dichtstoffen.

17. Verwendung des Polyaldimins **ALD** der Formel (I), wie er in einer einkomponentigen feuchtigkeitshärtenden Zusammensetzung gemäss einem der Ansprüche 1 bis 10 enthalten ist, zur Verbesserung des Tieftemperaturverhaltens von ausgehärteten Polyurethanzusammensetzungen, indem das Verhältnis σ_{100%(-20°C)} / σ_{100%(RT)} der 100%-Dehnspannung bei -20°C zur 100%-Dehnspannung bei 23°C einen Wert von < 1.5 ist.

## Claims

1. One-component moisture-curing composition comprising
a) at least one polyurethane polymer **P** which contains isocyanate groups and has an average molecular weight of at least 4000 g/mol, and
b) at least one polyaldimine **ALD** of the formula (I), 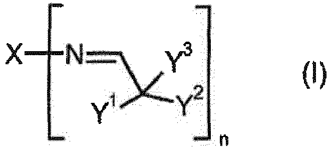
where X is the radical of an n-functional polyamine having aliphatic primary amino groups and an average amine equivalent weight of at least 180 g/eq, preferably at least 220 g/eq, following removal of n amino groups;
n is 2 or 3,
Y¹ and Y² either independently of one another are each a monovalent hydrocarbon radical having 1 to 12 C atoms,
or together form a divalent hydrocarbon radical having 4 to 20 C atoms which is part of an unsubstituted or substituted carbocyclic ring having 5 to 8, preferably 6, C atoms, and Y3 is a radical of the formula (IV) 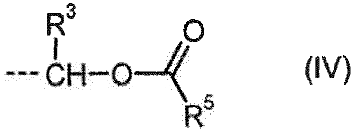
where R³ is a hydrogen atom or is an alkyl or arylalkyl group and
R⁵ is either a linear or branched alkyl chain having 11 to 30 carbon atoms, optionally with at least one heteroatom, more particularly with at least one ether oxygen,
or a singly or multiply unsaturated linear or branched hydrocarbon chain having 11 to 30 carbon atoms;
the isocyanate group content being not more than 3.5% by weight, based on the sum of the isocyanate-group-containing constituents present in the composition;
and further comprising at least one catalyst K which accelerates the hydrolysis of the aldimine groups and which is an organic carboxylic acid, an organic carboxylic anhydride, a silyl ester of an organic carboxylic acid, an organic sulfonic acid, a sulfonic ester or another organic or inorganic acid, and the amount of which is 0.005% to 2% by weight, based on the overall polyurethane composition.

2. One-component moisture-curing composition according to Claim 1, **characterized in that** the catalyst **K** is benzoic acid or salicylic acid.

3. One-component moisture-curing composition according to Claim 1 or 2, **characterized in that** X in formula (I) is a polyoxyalkylene radical, more particularly a polyoxypropylene or a polyoxybutylene radical, it being possible for each of these radicals also to contain fractions of other oxyalkylene groups.

4. One-component moisture-curing composition according to any one of the preceding claims, **characterized in that** the polyurethane polymer **P** is obtained from a reaction of at least one polyisocyanate with at least one polyol, the NCO/OH ratio having a value of not more than 2.5, more particularly not more than 2.2.

5. One-component moisture-curing composition according to Claim 4, **characterized in that** the polyol is a polyoxyalkylene polyol, more particularly a polyoxypropylene diol or triol or an ethylene oxide-terminated polyoxypropylene diol or triol.

6. One-component composition according to Claim 4 or 5, **characterized in that** the polyol has a molecular weight of 1000 to 30 000 g/mol and a degree of unsaturation of less than 0.02 meq/g.

7. One-component moisture-curing composition according to any one of the preceding claims, **characterized in that** the polyurethane polymer **P** is present in an amount of 10% - 80% by weight, preferably in an amount of 15% - 50% by weight, based on the overall polyurethane composition.

8. One-component moisture-curing composition according to any one of the preceding claims, **characterized in that** the polyaldimine **ALD** is present in an amount of 0.3 to 1.0, preferably of 0.4 to 0.9, more preferably 0.5 to 0.8, equivalent of aldimine groups per equivalent of isocyanate groups in the composition.

9. One-component moisture-curing composition according to any one of the preceding claims, **characterized in that** it further comprises at least one filler **F**, more particularly calcium carbonate.

10. One-component moisture-curing composition according to any one of the preceding claims, **characterized in that** it further comprises at least one thickener **V**.

11. Use of a composition according to any one of Claims 1 to 10 as a sealant.

12. Method of sealing comprising the steps of
(i) applying a composition according to any one of Claims 1 to 10 between a substrate **S1** and a substrate **S2,**
(ii) curing the composition by contact with moisture,
the substrates **S1** and **S2** being alike or different from one another.

13. Method according to Claim 12, **characterized in that** at least one of the substrates, **S1** or **S2,** is glass, glass ceramic, concrete, mortar, brick, tile, plaster, a natural stone such as granite or marble, a metal or an alloy such as aluminum, steel, nonferrous metal, galvanized metal; a wood, a plastic such as PVC, polycarbonate, PMMA, polyester, epoxy resin; a powder coating, an ink or a paint, more particularly an automobile finish.

14. Sealed article produced by means of a method of sealing according to either of Claims 12 and 13.

15. Sealed article according to Claim 14, **characterized in that** the article is a built structure, more particularly a built structure in construction or civil engineering, or a part thereof or a means of transport, more particularly a land or water vehicle, or a part thereof.

16. Use of the polyaldimine **ALD** of the formula (I) as present in a one-component moisture-curing composition according to any one of Claims 1 to 10 in sealants.

17. Use of the polyaldimine **ALD** of the formula (I) as present in a one-component moisture-curing composition according to any one of Claims 1 to 10 to improve the low-temperature performance of cured polyurethane compositions by virtue of the ratio σ_{100%(-20°C)}) / σ_{100%(RT)} of the 100% extension stress at -20°C to the 100% extension stress at 23°C being a value of < 1.5.

## Revendications

1. Composition durcissant sous l'effet de l'humidité, à un composant, comprenant
a) au moins un polymère P de polyuréthane contenant des groupes isocyanate, qui présente un poids moléculaire moyen d'au moins 4000 g/mole, et
b) au moins une polyaldimine ALD de formule (I) 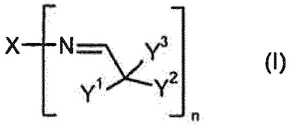
dans laquelle X représente une polyamine n-fonctionnelle présentant des groupes amino primaires aliphatiques et un poids équivalent d'amine moyen d'au moins 180 g/éq, de préférence d'au moins 220 g/éq, après l'élimination de n groupes amino ;
n vaut 2 ou 3,
Y¹ et Y² représentent soit, indépendamment l'un de l'autre, à chaque fois un radical hydrocarboné monovalent comprenant 1 à 12 atomes de carbone ; soit forment ensemble un radical hydrocarboné divalent comprenant 4 à 20 atomes de carbone, qui fait partie d'un cycle carbocyclique, le cas échéant substitué, comprenant 5 à 8, de préférence 6, atomes de carbone et
Y³ représente un radical de formule (IV) 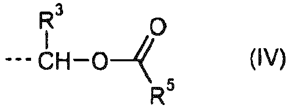
dans laquelle R³ représente un atome d'hydrogène ou un groupe alkyle ou arylalkyle et
R⁵ représente soit une chaîne alkyle linéaire ou ramifiée comprenant 11 à 30 atomes de carbone, présentant le cas échéant au moins un hétéroatome, présentant en particulier au moins un oxygène à fonction éther, soit une chaîne hydrocarbonée linéaire ou ramifiée, monoinsaturée ou polyinsaturée, comprenant 11 à 30 atomes de carbone ;
la teneur en groupes isocyanate étant d'au plus 3,5% en poids, par rapport à la somme des constituants contenant des groupes isocyanate contenus dans la composition ;
ainsi qu'en outre au moins un catalyseur K, qui accélère l'hydrolyse des groupes aldimine et qui est un acide carboxylique organique, un anhydride d'acide carboxylique organique, un ester silylique d'un acide carboxylique organique, un acide sulfonique organique, un ester d'acide sulfonique ou un autre acide organique ou inorganique et dont la teneur est de 0,005 à 2% en poids, par rapport à la composition totale de polyuréthane.

2. Composition durcissant sous l'effet de l'humidité, à un composant selon la revendication 1, **caractérisée en ce que** le catalyseur K est l'acide benzoïque ou l'acide salicylique.

3. Composition durcissant sous l'effet de l'humidité, à un composant selon la revendication 1 ou 2, **caractérisée en ce que** X dans la formule (I) représente un radical polyoxyalkylène, en particulier un radical polyoxypropylène ou polyoxybutylène, ces radicaux pouvant à chaque fois également contenir des proportions d'autres groupes oxyalkylène.

4. Composition durcissant sous l'effet de l'humidité, à un composant selon l'une quelconque des revendications précédentes, **caractérisée en ce que** le polymère P de polyuréthane est obtenu à partir d'une transformation d'au moins un polyisocyanate avec au moins un polyol, le rapport NCO/OH valant au plus 2,5, en particulier au plus 2,2.

5. Composition durcissant sous l'effet de l'humidité, à un composant selon la revendication 4, **caractérisée en ce que** le polyol est un polyoxyalkylènepolyol, en particulier un polyoxypropylènediol ou un polyoxypropylènetriol ; ou un polyoxypropylènediol ou un polyoxypropylènetriol terminé par de l'oxyde d'éthylène.

6. Composition à un composant selon la revendication 4 ou 5, **caractérisée en ce que** le polyol présente un poids moléculaire de 1000 à 30.000 g/mole et un degré d'insaturation inférieur à 0,02 méq/g.

7. Composition durcissant sous l'effet de l'humidité, à un composant selon l'une quelconque des revendications précédentes, **caractérisée en ce que** le polymère P de polyuréthane est présent en une quantité de 10-80% en poids, de préférence en une quantité de 15-50% en poids, par rapport à la composition totale de polyuréthane.

8. Composition durcissant sous l'effet de l'humidité, à un composant selon l'une quelconque des revendications précédentes, **caractérisée en ce que** la polyaldimine ALD est présente dans la composition en une quantité de 0,3 à 1,0, de préférence de 0,4 à 0,9, de manière particulièrement préférée 0,5 à 0,8, équivalent de groupes aldimine par équivalent de groupes isocyanate.

9. Composition durcissant sous l'effet de l'humidité, à un composant selon l'une quelconque des revendications précédentes, **caractérisée en ce qu'**elle comprend en outre au moins une charge F, en particulier le carbonate de calcium.

10. Composition durcissant sous l'effet de l'humidité, à un composant selon l'une quelconque des revendications précédentes, **caractérisée en ce qu'**elle comprend en outre au moins un épaississant V.

11. Utilisation d'une composition selon l'une quelconque des revendications 1 à 10 comme masse d'étanchéité.

12. Procédé de bouchage comprenant les étapes de
(i) application d'une composition selon l'une quelconque des revendications 1 à 10 entre un substrat S1 et un substrat S2 ;
(ii) durcissement de la composition par contact avec de l'humidité,
les substrats S1 et S2 étant identiques ou différents l'un de l'autre.

13. Procédé selon la revendication 12, **caractérisé en ce qu'**au moins un des substrats S1 ou S2 est du verre, de la céramique de verre, du béton, du mortier, de la brique, une tuile, du plâtre, une pierre naturelle telle que le granite ou le marbre ; un métal ou un alliage tel que l'aluminium, l'acier, un métal non ferreux, un métal zingué ; du bois, un matériau synthétique tel qu'un PVC, un polycarbonate, un PMMA, un polyester, une résine époxyde ; un revêtement en poudre, une peinture ou une laque, en particulier une laque pour automobiles.

14. Objet étanchéifié, qui est réalisé au moyen d'un procédé de bouchage selon l'une quelconque des revendications 12 ou 13.

15. Objet étanchéifié selon la revendication 14, **caractérisé en ce que** l'objet est une construction, en particulier une construction au-dessus du sol ou une construction souterraine, ou une partie de celle-ci ou un moyen de transport, en particulier un véhicule aquatique ou terrestre, ou une partie de celui-ci.

16. Utilisation de la polyaldimine ALD de formule (I), telle qu'elle est contenue dans une composition durcissant sous l'effet de l'humidité, à un composant selon l'une quelconque des revendications 1 à 10, dans des masses d'étanchéité.

17. Utilisation de la polyaldimine ALD de formule (I), telle qu'elle est contenue dans une composition durcissant sous l'effet de l'humidité, à un composant selon l'une quelconque des revendications 1 à 10, pour l'amélioration du comportement à basse température de compositions durcies de polyuréthane, en ce que le rapport σ_{100%(-20°C)}) / σ_{100%(RT)} de la contrainte d'allongement à 100% à -20°C à la contrainte d'allongement à 100% à 23°C est < 1,5.
